Europäisches Patentamt

European Patent Office

Office européen des brevets

(19)

(11) **EP 0 910 547 B1**

(12) **FASCICULE DE BREVET EUROPEEN**

(45) Date de publication et mention
de la délivrance du brevet:
**04.07.2001 Bulletin 2001/27**

(21) Numéro de dépôt: **97920792.5**

(22) Date de dépôt: **21.04.1997**

(51) Int Cl.$^7$: **C01B 31/00**

(86) Numéro de dépôt international:
**PCT/FR97/00710**

(87) Numéro de publication internationale:
**WO 97/41061 (06.11.1997 Gazette 1997/47)**

(54) **NOUVEAUX CARBONES FLUORES, LEUR PROCEDE DE PREPARATION ET LEUR UTILISATION COMME MATERIAU D'ELECTRODE**

NEUE FLUORIERTE KOHLENSTOFFE, VERFAHREN ZU DEREN HERSTELLUNG UND DEREN VERWENDUNG ALS ELEKTRODENMATERIAL

NEW CARBONS CONTAINING FLUORINE, METHOD OF PREPARATION THEREOF AND USE AS ELECTRODE MATERIAL

(84) Etats contractants désignés:
**AT BE CH DE DK ES FI FR GB GR IE IT LI LU NL PT SE**

(30) Priorité: **26.04.1996 FR 9605311**

(43) Date de publication de la demande:
**28.04.1999 Bulletin 1999/17**

(73) Titulaire: **CENTRE NATIONAL DE LA RECHERCHE SCIENTIFIQUE (CNRS)
75016 Paris (FR)**

(72) Inventeurs:
• **YAZAMI, Rachid**
**F-38330 Saint Nazaire Saint Ismier (FR)**
• **HAMWI, André**
**F-63000 Clermont-Ferrand (FR)**

• **HANY, Pascal**
**F-38100 Grenoble (FR)**

(74) Mandataire: **Sueur, Yvette et al
Cabinet SUEUR & L'HELGOUALCH,
109, boulevard Haussmann
75008 Paris (FR)**

(56) Documents cités:
**WO-A-89/10328       WO-A-90/07798
FR-A- 2 512 429       GB-A- 2 137 605
US-A- 4 119 655**

• **DATABASE WPI Section Ch, Week 8750 Derwent
Publications Ltd., London, GB; Class E36, AN
87-354306 XP002021590 & SU 1 308 550 A
(YAKOVLEV P V) , 7 Mai 1987**

**Description**

La présente invention concerne un carbone fluoré, un procédé pour sa préparation et son utilisation comme matière active d'électrode.

Les carbones fluorés, qui comprennent les fluorures de carbone et les composés d'insertion carbone-fluor, sont connus pour leurs applications d'une part comme lubrifiants, et d'autre part comme matériaux de cathode dans les générateurs électrochimiques au lithium. La première application est fondée sur les faibles énergies de surface provenant de la présence de groupes hydrophobes C-F. La seconde application est permise par la relative facilité d'insertion des ions lithium durant le processus de décharge du générateur, ainsi que par le grand caractère réducteur du lithium vis-à-vis de la liaison C-F.

On connaît différents procédés pour préparer des carbones fluorés, qui donnent des produits différents.

Des fluorures de carbone ont été obtenus par fluoration directe. Un procédé de fluoration directe du carbone a été décrit en 1934 [O. Ruff, et al, Z. Anorg. Allgem. Chem., 217, 1 (1934)]. Il a permis d'obtenir un composé gris de composition $CF_{0,92}$. Un procédé de fluoration directe du graphite à des températures de 410°C à 550°C a permis d'obtenir une série de carbones fluorés dont la composition était de $CF_{0,676}$ à $CF_{0,988}$ [W. Rüdorff, et al, Z. Anorg. Allgem. Chem., 253, 281 (1947)]. Les fluorures de carbone ainsi obtenus correspondent à une structure $(CF)_n$ dans laquelle les couches de carbone sont constituées d'un réseau infini de cycles hexagonaux "forme chaise" liés entre eux par une liaison du type $sp^3$. La liaison C-F est purement covalente et les composés sont des isolants électriques. Un autre procédé par fluoration directe permettant d'obtenir un fluorure de carbone ayant la formule $(C_2F)_n$ et dans lequel la liaison C-F est une liaison covalente a été décrit par Y. Kita, et al, J. Am. Chem. Soc., 101, 3832, (1979).

Les composés ainsi obtenus par fluoration directe, en particulier $(CF)_n$, sont actuellement utilisés comme matériau de cathode dans des piles au lithium commercialisée. Ces piles se déchargent autour de 2,4 V à 2,5 V sous un courant de densité voisine de 1 $mA/cm^2$.

La caractéristique essentielle des fluorures graphitiques est la forte énergie de la liaison C-F qui peut être mesurée par exemple par spectrométrie ESCA (XPS) et qui donne les valeurs des pics les plus intenses de la raie $F_{1S} \geq 688,5$ eV et de la raie $C_{1s} \geq 290$ eV. En plus, l'hybridation $sp^3$ du carbone entraîne une augmentation de la longueur de la liaison C-C à l'intérieur de l'hexagone. Le paramètre a de la structure, qui est de 2,46 Å dans le graphite, dépasse 2,50 Å dans $(C_2F)_n$ et $(CF)_n$ [N. Watanabe et al, "Graphite Fluorides", Elsevier (1988) p.50]. En outre, dans tous les cas de fluoration directe d'un graphite naturel ou synthétique ou d'un coke, la température de fluoration est nécessairement supérieure à 400°C si l'on veut obtenir un composé riche en fluor (F/C> 0,6) utilisable dans une pile.

Des composés d'insertion carbone-fluor, dans lesquels F/C < 0,5 ont été obtenus par divers procédés de fluoration de carbone à température ambiante. Un premier procédé consiste à faire réagir du graphite avec un mélange gazeux de $F_2$ + HF et il permet d'obtenir des composés d'insertion de stade 1 ayant une composition allant de $C_4F$ à $C_{3,6}F$ [W. Rüdorff, et al, Chem. Ber. 80, 417 (1947)]. Le stade s désigne le nombre de couches de carbone séparant deux couches successives de fluor. Ainsi un composé de stade 1 présente une séquence d'empilement des couches selon C/F/C/F... et un composé de stade 2 présente la séquence F/C/C/F/C/C... .

Un autre procédé connu consiste à faire réagir le graphite avec le fluor en présence de HF ou d'un fluorure métallique tel que LiF, $SbF_5$, $WF_6$, $CuF_2$ ou AgF et il permet d'obtenir des composés d'insertion $C_xF$ de stade 1 à 4, avec $2 \leq x \leq 16$ [T. Nakajima, et al., Z. Naturforsch. 36b, 1419 (1981)]. De même, on connaît la synthèse de produits similaires de stade 1 à stade 4 ayant une composition de $C_2F$ à $C_{10}F$, par réaction à température ambiante de graphite avec une atmosphère de $F_2$ contenant une petite quantité de fluorure HF, $AsF_5$, $IF_5$ ou $OsF_6$. Dans tous les composés d'insertion ainsi obtenus, le rapport F/C est au plus égal à 0,5. Or l'on sait que la capacité d'un générateur contenant un carbone fluoré comme matière active d'une électrode augmente avec le taux de fluor. Un taux de fluor inférieur à 0,5 est donc insuffisant. En outre, le fluor contenu dans ces composés est moins fortement lié au carbone, ce qui lui permet d'avoir une mobilité entre les plans. De ce fait, le fluor peut se désintercaler, se dissoudre dans l'électrolyte et réagir avec l'électrode au lithium entraînant un phénomène d'autodécharge. Ces composés d'insertion préparés en présence de HF ou d'un fluorure métallique ont un caractère ionique lorsque la teneur en fluor est très faible (F/C < 0,1) ou un caractère ionocovalent pour des teneurs en fluor supérieures (0,2 < F/C < 0,5). En tout état de cause, l'énergie de liaison mesurée par ESCA donne pour le pic le plus important de la raie $F_{1S}$ une valeur inférieure à 687 eV et celle de la raie $C_{1S}$ une valeur inférieure à 285 eV [T. Nakajima, Fluorine-carbon and Fluoride-carbon, Chemistry, Physics and Applications, Marcel Dekker (1995) p.13]. En outre, le carbone reste hybridé en $sp^2$ et le paramètre cristallographique a dans le plan reste voisin de 2,46 Å comme dans le cas du graphite.

Des composés d'insertion carbone-fluor dans lesquels F/C > 0,5 ont été obtenus par un procédé de fluoration à l'aide d'un mélange gazeux de HF, de $F_2$ et d'un fluorure $MF_n$ métallique ou non métallique [A. Hamwi, et al., Synt. Metals, 26, 89 (1988)]. Ce procédé a permis d'obtenir des composés de formule $CF_xM_y$ de stade 1 ayant un rapport F/C compris entre 0,52 à 0,8 et un rapport M/C compris entre 0,02 à 0,06. Ce procédé présente toutefois un inconvénient pour la préparation de carbones fluorés destinés à être utilisés comme matière active d'électrode. Les composés obtenus sont relativement peu stables lors de leur utilisation comme matière active d'une électrode dans un générateur électrochimique ayant une électrode négative au lithium. Cette instabilité se traduit par une perte de capacité de la pile par autodécharge, en particulier à plus haute température. Cette perte est principalement due à la forte teneur en impureté M. En outre, les composés dans lesquels la valeur de y est très faible, proche de la limite inférieure y = 0,02, sont difficiles à obtenir par ledit procédé.

Le but de la présente invention est de fournir un nouveau carbone fluoré ayant un taux réduit en impureté et donc une bonne stabilité lors de son utilisation dans un générateur électrochimique ayant une électrode négative au lithium, ainsi qu'une teneur en fluor suffisante pour son utilisation dans un générateur électrochimique.

L'invention a ainsi pour objet un carbone fluoré, un procédé pour sa préparation et son utilisation comme matière active d'électrode positive dans une pile dont l'électrode négative est une électrode au lithium.

Le carbone fluoré de la présente invention est caractérisé en ce que:

- il correspond à la formule $CF_xM_y$ dans laquelle x>0,6, y<0,018, M représente un élément choisi parmi I, Cl, Br, Re, W, Mo, Nb, Ta, B, Ti, P, As, Sb, S, Se, Te, Pt, Ir et Os;
- son paramètre cristallographique a correspondant à la raie (100) du réseau est tel que 2,46 Å $\leq$ a $\leq$ 2,49 Å ;
- l'énergie de liaison C-F est caractérisée par les raies les plus intenses $F_{1s}$ et $C_{1s}$ à des positions telles que 687,5 eV $\leq F_{1s} \leq$ 688,5 eV et 287 eV $\leq C_{1s} \leq$ 290 eV, dans les spectres ESCA.

Une telle énergie de liaison correspond à une liaison du type ionocovalent.

Le procédé pour préparer un carbone fluoré de l'invention est caractérisé en ce que :

- au cours d'une première étape, on fait réagir un composé carboné choisi parmi les graphites naturels ou synthétiques et les carbones graphitisables à texture mosaïque par un traitement thermique, avec un mélange gazeux $(HF + F_2)$ en présence d'un fluorure $MF_n$ à une température entre 15°C et 80°C, M représentant un élément choisi parmi I, Cl, Br, Re, W, Mo, Nb, Ta, B, Ti, P, As, Sb, S, Se, Te, Pt, Ir et Os et n représentant la valence de l'élément M, avec n $\leq$ 7 ;
- au cours d'une deuxième étape, on fait réagir le composé obtenu à la fin de la première étape, avec du fluor pendant 1 à 20 heures à une température entre 20°C et 400°C.

Pour la première étape, on utilise de préférence un graphite naturel ou synthétique ou un carbone graphitisable à texture mosaïque ayant une granulométrie inférieure à 100 μm, de préférence entre 4 et 30 μm. Parmi les carbones graphitisables, on préfère les cokes de brai de houille et les cokes de pétrole.

Le fluorure $MF_n$ est choisi de préférence parmi $IF_7$, $IF_5$, $BrF_5$, $ClF_3$, $ReF_6$, $WF_6$, $MoF_6$, $TiF_4$, $NbF_5$, $TaF_5$, $PF_5$, $AsF_5$, $SbF_5$, $BF_3$, $SF_6$, $SeF_6$, $IrF_6$, $OsF_6$, $TeF_6$ et $PtF_6$. $IF_7$ et $IF_5$ sont particulièrement préférés.

Le mélange gazeux utilisé au cours de la première étape du procédé est constitué de préférence par 0,8 à 1,2 moles de $MF_n$, 2 à 6 moles de HF et 6 à 8 moles de $F_2$ pour le traitement de 8 à 14 moles de C.

Au cours de la deuxième étape du procédé, la température est comprise de préférence entre 20°C et 200°C lorsque le composé de départ est à base de coke graphitisable, et entre 80°C et 400°C lorsque le composé de départ est à base de graphite. En outre, il est préférable d'opérer sous une pression partielle de $F_2$ comprise entre 5 x 10$^4$ et 10$^5$ Pa.

La première étape du procédé de l'invention peut être mise en oeuvre soit en introduisant le composé $MF_n$ dans le réacteur, soit en le préparant in situ par action directe du fluor sur l'élément M ou sur l'un de ses oxydes $MO_q$ pour lequel 2q<n$\leq$7, ou sur l'un de ses fluorures inférieurs $MF_p$ pour lequel p<n$\leq$7.

La seconde étape du procédé peut être effectuée immédiatement après la première sur le produit tel qu'obtenu. Elle peut également être effectuée après avoir lavé le produit obtenu lors de la première étape, par exemple par de l'eau pure ou de l'eau acidulée, ou par un solvant organique choisi parmi les alcools, les éthers, les esters ou les acides carboxyliques, ayant de préférence au plus 8 atomes de carbone.

Les carbones fluorés de la présente invention sont particulièrement utiles comme matériau d'électrode dans un générateur électrochimique ayant une électrode négative de lithium.

Un générateur électrochimique selon l'invention comprend une électrode négative au lithium et une électrode positive entre lesquelles est placé un séparateur, et un électrolyte. Il est caractérisé en ce que l'électrode positive contient, comme matière active, un carbone fluoré :

- qui correspond à la formule $CF_xM_y$ dans laquelle x>0,6, y<0,018, M représente un élément choisi parmi I, Cl, Br, Re, W, Mo, Nb, Ta, B, Ti, P, As, Sb, S, Se, Te, Pt, Ir et Os ;
- dont le paramètre cristallographique a correspondant à la raie (100) du réseau est tel que 2,46 Å $\leq$ a $\leq$ 2,49 Å ;
- dans lequel l'énergie de liaison C-F est caractérisée par les raies les plus intenses $F_{1s}$ et $C_{1s}$ à des positions telles que 687,5 eV $\leq F_{1s} \leq$ 688,5 eV et 287 eV $\leq C_{1s} \leq$ 290 eV, dans les spectres ESCA.

Dans un générateur électrochimique selon l'invention, l'électrode positive est constituée par un matériau composite comprenant le carbone fluoré selon l'invention, un composé assurant la conduction électronique et éventuellement un liant.

Le matériau assurant la conduction électronique peut être choisi parmi les noirs de carbone, le noir d'acétylène, le graphite en poudre, les cokes, les fibres de carbone.

Comme liant, on peut utiliser un poly(oxyde d'éthylène), un PVDF (fluorure de polyvinylidène), un EPDM (éthylène propylène diène monomère), un poly(acrylonitrile) ou une gomme de styrène butadiène (SBR). Le PVDF copolymérisé commercialisé par la Société Elf Atochem sous la dénomination Kynar Flex est particulièrement préféré.

L'électrode négative peut être constituée par une feuille ou un film de lithium ou d'un alliage métallique de lithium (LiAl par exemple), ou de carbone-lithium ($Li_xC_6$ par exemple).

L'électrolyte est un électrolyte liquide constitué par un sel en solution dans un solvant polaire. Le sel peut être choisi parmi les composés $LiAsF_6$, $LiBF_4$, $LiCF_3SO_3$, $LiClO_4$, $LiN(CF_3SO_2)_2$, $LiPF_6$. Le solvant peut être choisi parmi le carbonate de diéthyle, le diéthoxyéthane, le diméthoxyméthane, le carbonate de diméthyle, le carbonate de propylène, le carbonate d'éthylène ou la $\gamma$-butyrolactone.

Le séparateur peut être à base d'un polyéthylène ou d'un polypropylène non tissés ou des deux. A titre d'exemple, on peut utiliser un film microporeux de polyéthylène, notamment un film commercialisé par la société Hoechst Celanese sous la dénomination Celgard 2400 ou 2502.

La présente invention est illustrée ci-après plus en détail à l'aide d'exemples de préparation de carbones fluorés et d'exemples d'utilisation de carbones fluorés comme matière active d'électrode positive dans un générateur électrochimique.

**EXEMPLE 1**

Préparation de carbones fluorés

Différents carbones fluorés ont été préparés conformément au procédé de l'invention, à partir de différents carbones initiaux.

Au cours de la première étape du procédé, 120 g (10 moles) de carbone préalablement dégazé sous vide à 300°C pendant 5 heures ont été introduits dans le réacteur, Ensuite, 266 g de $IF_5$ (1,2 moles) ont été ajoutés en présence de 300 g (environ 8 moles) de $F_2$ et de 120 g (6 moles) de HF. Après 4 heures de réaction à la température ambiante, le réacteur a été dégazé sous balayage d'azote. Le produit de la réaction a ensuite été récupéré et lavé à l'eau, puis analysé chimiquement et par ESCA.

Les résultats de l'analyse pour les différents produits obtenus sont indiqués dans le tableau 1 ci-dessous.

TABLEAU 1

| Type de carbone initial | granulométrie moyenne (µm) | Composition chimique | Energie de liaison C-F (eV) | | Echantillon n° |
|---|---|---|---|---|---|
| | | | $F_{1S}$* | $C_{1S}$* | |
| GN**-4 | 4,2 | $CF_{0,75}I_{0,02}$ | 687,5 | 289,2 | GN-4F(I) |
| GN-8 | 8,5 | $CF_{0,7}I_{0,025}$ | 687,2 | 289,0 | GN-8F(I) |
| GN-18 | 18,2 | $CF_{0,72}I_{0,030}$ | 687,3 | 289,1 | GN-16F(I) |
| Coke A *** | 6,2 | $CF_{0,71}I_{0,032}$ | 687,2 | 289,1 | Coke AF(I) |
| Coke B. *** | 6,2 | $CF_{0,65}I_{0,040}$ | 685,8 | 287,1 | Coke BF(I) |

\* il s'agit de la position de la raie la plus intense

\*\* GN = graphite naturel

\*\*\* traitement préalable à 1100°C

Le coke A a une structure mosaïque, contrairement au coke B qui a été utilisé à titre comparatif.

Tous les composés obtenus après la première étape ont un paramètre a tel que 2,46 Å $\leq$ a $\leq$ 2,49 Å.

La seconde étape du procédé de l'invention a été effectuée en introduisant dans un réacteur environ 300 g du produit obtenu lors de la première étape, puis du fluor (environ 1 à 2 moles) et en portant ensuite la température à 150°C et en maintenant cette température pendant 2 heures.

Le réacteur a ensuite été refroidi à la température ambiante, puis dégazé sous balayage d'azote sec pendant 2 heures.

Les produits obtenus à la fin de la seconde étape ont été analysés et les résultats sont reportés dans le tableau 2 ci-dessous.

TABLEAU 2

| Type de carbone initial | Composition chimique | Energie de liaison C-F (eV) | | Echantillon n° |
|---|---|---|---|---|
| | | $F_{1S}$* | $C_{1S}$* | |
| GN4 | $CF_{0,95}I_{0,012}$ | 687,8 | 289,5 | GN 4F (II) |
| GN8 | $CF_{0,91}I_{0,011}$ | 687,5 | 289,3 | GN 8F (II) |
| GN18 | $CF_{0,85}I_{0,015}$ | 687,7 | 289,4 | GN 18F (II) |
| coke A | $CF_{0,90}I_{0,014}$ | 687,5 | 289,3 | coke AF(II) |
| coke B | $CF_{0,75}I_{0,022}$ | 686,2 | 287,5 | coke BF(II) |

\* Il s'agit de la position de la raie la plus intense.

Les résultats indiqués dans le tableau 2 montrent que l'utilisation d'un composé carboné de départ qui n'a pas la texture mosaïque donne un carbone fluoré qui a une teneur en iode relativement élevée.

## EXEMPLE 2

Elaboration de générateurs électrochimiques selon l'invention

Avec chacun des carbones fluorés obtenus indiqués dans le tableau 2, on a monté un générateur selon l'invention sous forme de pile bouton. Des piles boutons ont également été montées à titre comparatif avec des carbones fluorés indiqués dans le tableau 1 et obtenus à la fin de la première étape.

On a utilisé comme électrode négative, une feuille de lithium ayant une épaisseur de 150 µm.

L'électrolyte est une solution 1M de perchlorate de lithium dans un mélange ternaire carbonate de propylène / carbonate d'éthylène / diméthoxyéthane avec un rapport volumique de 1/1/2. Le séparateur est un film polyéthylène Celgard 2502.

L'électrode positive est constituée par un matériau composite obtenu par pressage sous 2,5 x $10^8$ Pa de 30 mg d'un mélange constitué par 80% en poids de l'un des carbones fluorés indiqués dans les tableaux 1 et 2, 10% de noir d'acétylène et 10% d'un fluorure de polyvinylidène commercialisé sous la dénomination Kynar Flex 2821 par la société Elf Atochem.

Chaque cellule test ainsi constituée a été soumise à une décharge à courant constant en suivant en fonction du temps les variations de potentiel jusqu'à 1 volt. Au potentiel de 1 V, tout le carbone fluoré est réduit par le lithium. Le régime de décharge imposé est de C/10, C étant la capacité théorique de décharge, qui peut être calculée à partir de la capacité massique théorique.

La capacité massique théorique Q exprimée en mAh.g$^{-1}$ est :

$$Q = \frac{x.96500.1000}{3600.M_{CFxMy}}$$

x correspondant au nombre d'électrons mis en jeu, $M_{CFxMy}$ représentant la masse molaire du carbone fluoré.

La capacité théorique d'une cellule test, exprimée en mAh est q = m.Q, m étant la masse de matière active $CF_xM_y$ exprimée en g.

Le régime de décharge C/10 est défini par le courant i imposé et donné par la relation q/10 = i.

Si la décharge s'effectue en un temps t<10 heures, la capacité pratique est $q_{pr}$= it (en mAh). Ramenée à la masse m, $q_{pr}$ donne la valeur de la densité massique pratique du composé carbone fluoré $Q_{pr}$ (mAh/g ou Ah/kg)= $q_{pr}$/m.

Le tableau 3 donne les valeurs de Q, $Q_{pr}$ et de la moyenne du potentiel de décharge e(V), ainsi que la densité d'énergie $D_E$ atteinte. $D_E$ (en Wh/kg) est obtenue par la relation simplifiée: $D_E = Q_{pr}$ (Ah/kg) x e (V).

TABLEAU 3

| Réf. du composé fluoré | Capacité théorique Q(mAh/g) | Capacité pratique $Q_{pr}$(C/10) mAh/g | Potentiel moyen e (V) | Densité d'énergie $D_E$ (Wh/kg) |
|---|---|---|---|---|
| GN4F (I) | 698 | 602 | 3,00 | 1806 |
| GN8F (I) | 658 | 557 | 3,05 | 1700 |

TABLEAU 3   (suite)

| Réf. du composé fluoré | Capacité théorique $Q$(mAh/g) | Capacité pratique $Q_{pr}$(C/10) mAh/g | Potentiel moyen e (V) | Densité d'énergie $D_E$ (Wh/kg) |
|---|---|---|---|---|
| GN18F (I) | 654 | 564 | 3,02 | 1703 |
| Coke AF(I) | 644 | 550 | 3,02 | 1661 |
| Coke BF(I) | 592 | 505 | 3,10 | 1566 |
| GN4F (II) | 806 | 705 | 2,96 | 2086 |
| GN8F (II) | 795 | 670 | 2,98 | 1997 |
| GN16F (II) | 758 | 680 | 2,89 | 1965 |
| CokeAF (II) | 784 | 682 | 2,85 | 1944 |
| CokeBF (II) | 692 | 590 | 3,00 | 1770 |

L'analyse du Tableau 3 montre que dans tous les cas, la double fluoration effectuée par le procédé de l'invention permet d'augmenter la capacité massique du carbone fluoré par rapport à un composé carboné de l'art antérieur obtenu à la fin de la première étape, sans pour autant diminuer considérablement le potentiel de décharge. Le résultat est une augmentation de la densité d'énergie. Les performances du carbone fluoré BF(II) plus riche en iode que les carbones fluorés de l'invention sont plus faibles.

**EXEMPLE 3**

Etude du comportement électrochimique de générateurs électrochimiques selon l'invention et de générateurs selon l'art antérieur.

Dans cet exemple, le comportement électrochimique de générateurs sous forme de piles boutons contenant un carbone fluoré selon l'invention est comparé avec celui d'une pile similaire contenant un carbone fluoré obtenu à haute température selon les procédés de l'art antérieur. Le composé carboné de l'art antérieur, désigné ci-après par HT-CF$_n$, a été obtenu par fluoration directe à 600°C pendant 5 heures du composé carboné désigné ci-dessus par GN4. Ce composé HT-CF$_n$ présente les caractéristiques suivantes : F/C = 1,05, le paramètre cristallographique dans le plan a = 2,53 Å, l'énergie de liaison C-F est caractérisée par des raies intenses $F_{1s}$= 689 eV et $C_{1s}$= 290,5 eV dans les spectres ESCA.

Une pile selon l'invention est désignée par "pile LT" et une pile selon l'art antérieur est désignée par "pile HT". Les piles LT ont été élaborées conformément à l'exemple 2 à partir du carbone fluoré GN4F (II) (pour LT-CF$_{0,95}$) décrit dans le tableau 2 ci-dessus. Les piles HT ont été élaborées conformément à l'exemple 2 avec le carbone fluoré haute température HT-CF$_n$ mentionné ci-dessus.

Les piles ont été soumises à des décharges avec un régime de décharge C/n croissant, n désignant le nombre d'heures théoriquement nécessaire pour la réduction totale du carbone fluoré. Le potentiel initial de chaque pile est donné dans le tableau 4, dans lequel sont indiqués également le potentiel moyen de décharge, la capacité massique et l'énergie massique obtenus.

TABLEAU 4

| Carbone fluoré | Régime de décharge | Potentiel initial (V vs Li/Li$^+$) | Potentiel moyen de décharge (V vs Li/Li$^+$) | Capacité massique (Ah. kg$^{-1}$) | Energie massique (Wh. kg$^{-1}$) |
|---|---|---|---|---|---|
| (HT-CF$_n$) | C/30 | 3,18 | 2,54 | 735 | 1867 |
| | C/20 | 3,19 | 2,52 | 726 | 1830 |
| | C/10 | 3,20 | 2,52 | 632 | 1592 |
| | C/5 | 3,20 | 2,46 | 640 | 1574 |
| | C/3 | 3,18 | 2,15 | 246 | 529 |

TABLEAU 4   (suite)

| Carbone fluoré | Régime de décharge | Potentiel initial (V vs Li/Li$^+$) | Potentiel moyen de décharge (V vs Li/Li$^+$) | Capacité massique (Ah. kg$^{-1}$) | Energie massique (Wh. kg$^{-1}$) |
|---|---|---|---|---|---|
| (LT-CF$_{0,95}$) (GN4F II) | C/30 | 3,70 | 3,15 | 724 | 2280 |
| | C/20 | 3,77 | 3,10 | 709 | 2198 |
| | C/10 | 3,62 | 3,00 | 705 | 2115 |
| | C/5 | 3,78 | 2,97 | 681 | 2022 |
| | C/3 | 3,80 | 2,50 | 507 | 1268 |

Il apparaît que les piles LT de l'invention ont un potentiel de décharge élevé, supérieur d'environ 25% à celui des piles HT de l'art antérieur.

En régime de décharge rapide, les piles LT de l'invention ont une capacité massique et une énergie massique supérieures à celles des piles HT de l'art antérieur.

**EXEMPLE 4**

Vieillissement accéléré de générateurs selon l'invention et de générateurs de l'art antérieur

Un test typique de vieillissement accéléré consiste à maintenir un générateur à une température T déterminée et à mesurer l'énergie qu'elle renferme encore au bout d'une période définie t. Dans l'exemple suivant, l'essai a été effectué à une température de 60°C pendant 1 semaine, ces valeurs étant adaptées pour le présent type de générateurs électrochimiques.

Les tests de décharge ont été effectués à la température ambiante, dans les mêmes conditions que celles décrites dans l'exemple 2, sous un régime C/10. Des piles boutons contenant un carbone fluoré selon l'invention [GN4F (II), coke AF(II)] sont comparées à des piles contenant un carbone fluoré de l'art antérieur [GN4F(I) et HT-CF$_n$] et à une pile bouton contenant le carbone fluoré BF(II).

Le Tableau 5 montre les résultats comparatifs obtenus avec des échantillons avant et après vieillissement. Ceux qui ont été vieillis comportent la lettre V dans leur référence. Pour les échantillons non vieillis, les résultats sont identiques à ceux donnés dans le Tableau 4.

Pour chaque échantillon, la baisse relative de capacité $\Delta Q_{pr}/Q_{pr}$ et de densité d'énergie $\Delta D_E/D_E$ est donnée en % par rapport aux valeurs initiales avant vieillissement.

TABLEAU 5

| Référence échantillon | $Q_{pr}$ (Ah/Kg) | $\Delta Q_{pr}/Q_{pr}$ (%) | e (V) | $D_E$ (Wh/Kg) | $\Delta D_E/D_E$ (%) |
|---|---|---|---|---|---|
| GN4F-(II) | 705 | | 2,96 | 2087 | |
| GN4F-(II)-V | 694 | 1,56 | 2,92 | 2026 | 2,9 |
| CokeAF-(II) | 682 | | 2,85 | 1944 | |
| CokeAF-(II)-V | 664 | 2,47 | 2,81 | 1866 | 4,0 |
| GN4F-(I) | 602 | | 3,00 | 1806 | |
| GN4F-(I)-V | 582 | 3,3 | 2,81 | 1635 | 9,5 |
| CokeAF-(I) | 550 | | 3,02 | 1661 | |
| CokeAF-(I)-V | 521 | 5,3 | 2,79 | 1463 | 12,5 |
| CF$_{1,02}$-HT | 632 | | 2,52 | 1592 | |
| CF$_{1,02}$-HT-V | 616 | 2,5 | 247 | 1521 | 4,46 |
| CokeBF-(II) | 590 | | 3,00 | 1770 | |
| CokeBF-(II)-V | 563 | 4,6 | 2,80 | 1578 | 10,8 |

Le tableau 5 montre que:

1) la seconde fluoration selon l'invention réduit considérablement le taux d'autodécharge $\Delta Q_{pr}/Q_{pr}$ [GN4F(I) : 3,3% et GN4F (II) : 1,56%].

2) le taux d'autodécharge augmente avec la teneur en iode. Les seuls composés pour lesquels $\Delta Q_{pr}/Q_{pr} < 2,5$ % sont ceux pour lesquels y < 0,018 à savoir GN4F II (y = 0,012), coke AF II (y = 0,014).

3) par rapport au taux d'autodécharge obtenu avec un carbone fluoré de l'invention [GN4F (II) et coke AF (II)], le taux d'autodécharge obtenu avec un carbone fluoré non conforme à l'invention [coke B(II)] ou avec un échantillon de l'art antérieur est soit supérieur [pour GN4(I) : 3,3% ; pour coke AF(I) : 5,3% ; pour coke BF(II) : 4,6%], soit voisin (HT-CF$_n$ : 2,5 %).

4) la perte de densité d'énergie est améliorée avec des carbones fluorés de l'invention par rapport aux carbones fluorés de l'art antérieur et par rapport au carbone fluoré issu d'un carbone graphitisable n'ayant pas la texture mosaïque.

Ainsi la seconde fluoration selon l'invention non seulement permet d'augmenter la densité d'énergie mais elle réduit très significativement le taux d'autodécharge qui devient du même ordre que celui déjà très bas de HT-CF$_n$ de l'art antérieur.

## Revendications

1.　Carbone fluoré, caractérisé en ce que:

   -　il correspond à la formule $CF_xM_y$ dans laquelle x>0,6, y<0,018, M représente un élément choisi parmi I, Cl, Br, Re, W, Mo, Nb, Ta, B, Ti, P, As, Sb, S, Se, Te, Pt, Ir et Os;
   -　son paramètre cristallographique a correspondant à la raie (100) du réseau est tel que $2,46\ \text{Å} \leq a \leq 2,49\ \text{Å}$ ;
   -　l'énergie de liaison C-F est caractérisée par les raies les plus intenses $F_{1s}$ et $C_{1s}$ à des positions telles que $687,5\ \text{eV} \leq F_{1s} \leq 688,5\ \text{eV}$ et $287\ \text{eV} \leq C_{1s} \leq 290\ \text{eV}$, dans les spectres ESCA.

2.　Procédé pour préparer un carbone fluoré, caractérisé en ce que :

   -　au cours d'une première étape, on fait réagir un composé carboné choisi parmi les graphites naturels ou synthétiques et les carbones graphitisables par un traitement thermique et ayant une texture mosaïque, avec un mélange gazeux ($HF + F_2$) en présence d'un fluorure $MF_n$ à une température entre 15°C et 80°C, M représentant un élément choisi parmi I, Cl, Br, Re, W, Mo, Nb, Ta, B, Ti, P, As, Sb, S, Se, Te, Pt, Ir et Os et n représentant la valence de l'élément M, avec $n \leq 7$ ;
   -　au cours d'une deuxième étape, on fait réagir le composé obtenu à la fin de la première étape, avec du fluor pendant 1 à 20 heures à une température entre 20°C et 400°C.

3.　Procédé selon la revendication 2, caractérisé en ce que le produit de départ de la première étape est un graphite naturel ou un carbone graphitisable à texture mosaïque ayant une granulométrie inférieure à $100\ \mu$ m.

4.　Procédé selon la revendication 3, caractérisé en ce que le carbone graphitisable est un coke de brai ou un coke de pétrole.

5.　Procédé selon la revendication 2, caractérisé en ce que le fluorure $MF_n$ est choisi parmi $IF_7$, $IF_5$, $BrF_5$, $ClF_3$, $ReF_6$, $WF_6$, $MoF_6$, $TiF_4$, $NbF_5$, $TaF_5$, $PF_5$, $AsF_5$, $SbF_5$, $BF_3$, $SF_6$, $SeF_6$, $IrF_6$, $OsF_6$, $TeF_6$ et $PtF_6$.

6.　Procédé selon la revendication 2, caractérisé en ce que le mélange gazeux utilisé au cours de la première étape est constitué par 0,8 à 1,2 moles de $MF_n$, 2 à 6 moles de HF et 6 à 8 moles de $F_2$ pour le traitement de 8 à 14 moles de C.

7.　Procédé selon la revendication 2, caractérisé en ce que, au cours de la deuxième étape du procédé, la pression partielle de $F_2$ est comprise entre $5 \times 10^4$ Pa et $10^5$ Pa.

8.　Procédé selon la revendication 2, caractérisé en ce que le composé carboné initial est un coke graphitisable et la température lors de la deuxième étape est comprise entre 20°C et 100°C.

9.　Procédé selon la revendication 2, caractérisé en ce que le composé carboné initial est un graphite et la température lors de la deuxième étape est comprise entre 80°C et 400°C.

**10.** Procédé selon la revendication 2, caractérisé en ce que le fluorure $MF_n$ est introduit dans le milieu réactionnel.

**11.** Procédé selon la revendication 2, caractérisé en ce que le fluorure $MF_n$ est formé in situ par action directe du fluor sur l'élément M ou sur l'un de ses oxydes $MO_q$ pour lequel $2q<n\leq7$, ou sur l'un de ses fluorures inférieurs $MF_p$ pour lequel $p<n\leq7$.

**12.** Procédé selon la revendication 2, caractérisé en ce que le produit obtenu à la fin de la première étape est lavé avant d'être soumis à l'action du fluor lors de la deuxième étape.

**13.** Electrode positive pour un générateur électrochimique au lithium, caractérisée en ce qu'elle contient comme matière active, un carbone fluoré selon la revendication 1.

**14.** Générateur électrochimique comprenant une électrode négative au lithium une électrode positive entre lesquelles est placé un séparateur, et un électrolyte, caractérisé en ce que l'électrode positive contient, comme matière active, un carbone fluoré :

- qui correspond à la formule $CF_xM_y$ dans laquelle $x>0,6$, $y<0,018$, M représente un élément choisi parmi I, Cl, Br, Re, W, Mo, Nb, Ta, B, Ti, P, As, Sb, S, Se, Te, Pt, Ir et Os;
- qui a un paramètre cristallographique a correspondant à la raie (100) du réseau tel que $2,46$ Å $\leq a \leq 2,49$ Å ;
- dont l'énergie de liaison C-F est caractérisée par les raies les plus intenses $F_{1s}$ et $C_{1s}$ à des positions telles que $687,5$ eV $\leq F_{1s} \leq 688,5$ eV et $287$ eV $\leq C_{1s} \leq 290$ eV, dans les spectres ESCA.

**15.** Générateur électrochimique selon la revendication 14, caractérisé en ce que l'électrode positive est constituée par un matériau composite comprenant outre le carbone fluoré, un composé assurant la conduction électronique et éventuellement un liant.

**16.** Générateur électrochimique selon la revendication 15, caractérisé en ce que le matériau assurant la conduction électronique est choisi parmi les noirs de carbone, le noir d'acétylène, le graphite en poudre, les cokes, les fibres de carbone.

**17.** Générateur électrochimique selon la revendication 15, caractérisé en ce que le liant est choisi parmi un poly(oxyde d'éthylène), un PVDF (fluorure de polyvinylidène), un EPDM (éthylène propylène diène monomère), un poly(acrylonitrile) ou une gomme de styrène butadiène (SBR).

**18.** Générateur électrochimique selon la revendication 14, caractérisé en ce que l'électrode négative est constituée par une feuille ou un film de lithium ou d'un alliage métallique de lithium, ou de carbone-lithium.

**19.** Générateur électrochimique selon la revendication 14, caractérisé en ce que l'électrolyte est un électrolyte liquide constitué par un sel en solution dans un solvant polaire.

**20.** Générateur électrochimique selon la revendication 19, caractérisé en ce que le sel est choisi parmi les composés $LiAsF_6$, $LiBF_4$, $LiCF_3SO_3$, $LiClO_4$, $LiN(CF_3SO_2)_2$, $LiPF_6$.

**21.** Générateur électrochimique selon la revendication 19, caractérisé en ce que le solvant est choisi parmi le carbonate de diéthyle, le diéthoxyéthane, le diméthoxyméthane, le carbonate de diméthyle, le carbonate de propylène, le carbonate d'éthylène ou la γ-butyrolactone.

**22.** Générateur électrochimique selon la revendication 14, caractérisé en ce que le séparateur est à base d'un polyéthylène ou d'un polypropylène non tissés ou des deux.

**Patentansprüche**

**1.** Fluorkohlenstoff, dadurch gekennzeichnet, dass

- er der Formel $CF_xM_y$ entspricht, worin gilt: $x > 0,6$ und $y < 0,018$ und M ein aus I, Cl, Br, Re, W, Mo, Nb, Ta, B, Ti, P, As, Sb, S, Se, Te, Pt, Ir und Os ausgewähltes Element darstellt;

- für seinen kristallographischen Parameter a, welcher der Gittergeraden (100) entspricht, gilt: $2{,}46\,\text{Å} \le a \le 2{,}49\,\text{Å}$;

- die C-F-Bindungsenergie durch die intensivsten Geraden $F_{1s}$ und $C_{1s}$ gekennzeichnet ist, die in ESCA-Spektren in den folgenden Bereichen liegen: $687{,}5\,\text{eV} \le F_{1s} \le 688{,}5\,\text{eV}$ und $287\,\text{eV} \le C_{1s} \le 290\,\text{eV}$.

2. Verfahren zur Herstellung eines Fluorkohlenstoffs, dadurch gekennzeichnet, dass:

- im Verlauf eines ersten Schritts eine kohlenstoffhältige Verbindung, die aus natürlichen oder synthetischen Graphiten und durch thermische Behandlung graphitierbaren Kohlenstoffen ausgewählt ist und eine mosaikartige Textur aufweist, mit einem Gasgemisch ($HF + F_2$) in Gegenwart eines Fluorids $MF_n$ bei einer Temperatur zwischen 15 °C und 80 °C umgesetzt wird, wobei M ein Element darstellt, das aus I, Cl, Br, Re, W, Mo, Nb, Ta, B, Ti, P, As, Sb, S, Se, Te, Pt, Ir und Os ausgewählt ist, und n die Wertigkeit des Elements M darstellt, wobei gilt: $n \le 7$;

- im Verlauf eines zweiten Schritts die am Ende des ersten Schritts erhaltende Verbindung 1 bis 20 h lang bei einer Temperatur zwischen 20 °C und 400 °C mit Fluor umgesetzt wird.

3. Verfahren nach Anspruch 2, dadurch gekennzeichnet, dass das Ausgangsprodukt des ersten Schritts ein natürlicher Graphit oder ein graphitierbarer Kohlenstoff mit mosaikartiger Textur ist, der eine Korngröße von unter 100 µm aufweist.

4. Verfahren nach Anspruch 3, dadurch gekennzeichnet, dass der graphitierbare Kohlenstoff ein Pechkoks oder ein Petrolkoks ist.

5. Verfahren nach Anspruch 2, dadurch gekennzeichnet, dass das Fluorid $MF_n$ aus $IF_7$, $IF_5$, $BrF_5$, $ClF_3$, $ReF_6$, $WF_6$, $MoF_6$, $TiF_4$, $NbF_5$, $TaF_5$, $PF_5$, $AsF_5$, $SbF_5$, $BF_3$, $SF_6$, $SeF_6$, $IrF_6$, $OsF_6$, $TeF_6$ und $PtF_6$ ausgewählt ist.

6. Verfahren nach Anspruch 2, dadurch gekennzeichnet, dass das im Verlauf des ersten Schritts eingesetzte Gasgemisch für die Behandlung von 8 bis 14 Mol C aus 0,8 bis 1,2 Mol $MF_n$, 2 bis 6 Mol HF und 6 bis 8 Mol $F_2$ besteht.

7. Verfahren nach Anspruch 2, dadurch gekennzeichnet, dass im Verlauf des zweiten Schritts des Verfahrens der $F_2$-Partialdruck zwischen $5 \times 10^4$ Pa und $10^5$ Pa liegt.

8. Verfahren nach Anspruch 2, dadurch gekennzeichnet, dass die kohlenstoffhältige Ausgangsverbindung ein graphitierbarer Koks ist und die Temperatur im zweiten Schritt zwischen 20 °C und 100 °C liegt.

9. Verfahren nach Anspruch 2, dadurch gekennzeichnet, dass die kohlenstoffhältige Ausgangsverbindung ein Graphit ist und die Temperatur im zweiten Schritt zwischen 80 °C und 400 °C liegt.

10. Verfahren nach Anspruch 2, dadurch gekennzeichnet, dass das Fluorid $MF_n$ dem Reaktionsmedium zugeführt wird.

11. Verfahren nach Anspruch 2, dadurch gekennzeichnet, dass das Pluorid $MF_n$ in situ durch direktes Einwirken von Fluor auf das Element M oder auf eines seiner Oxide $MO_q$, wobei gilt: $2q < n \le 7$, oder auf eines seiner niedereren Fluoride $MF_p$, wobei gilt $p < n \le 7$, gebildet wird.

12. Verfahren nach Anspruch 2, dadurch gekennzeichnet, dass das am Ende des ersten Schritts erhaltene Produkt gewaschen wird, bevor im zweiten Schritt Fluor darauf einwirken gelassen wird.

13. Positive Elektrode für einen elektrochemischen Lithium-Stromerzeuger, dadurch gekennzeichnet, dass sie als aktives Material einen Fluorkohlenstoff nach Anspruch 1 enthält.

14. Elektrochemischer Stromerzeuger, der eine negative Lithiumelektrode und eine positive Elektrode, zwischen denen eine Scheidewand angeordnet ist, sowie einen Elektrolyten umfasst, dadurch gekennzeichnet, dass die positive Elektrode als aktives Material einen Fluorkohlenstoff enthält:

- welcher der Formel $CF_xM_y$ entspricht, worin gilt: $x > 0{,}6$ und $y < 0{,}018$, M ein aus I, Cl, Br, Re, W, Mo, Nb, Ta, B, Ti, P, As, Sb, S, Se, Te, Pt, Ir und Os ausgewähltes Element darstellt;

- der einen kristallographischen Parameter a aufweist, welcher der Gittergeraden (100) entspricht, wobei gilt: $2{,}46\,\text{Å} \leq a \leq 2{,}49\,\text{Å}$;

- dessen C-F-Bindungsenergie durch die intensivsten Geraden $F_{1s}$ und $C_{1s}$ gekennzeichnet ist, die in ESCA-Spektren in den folgenden Bereichen liegen: $687{,}5\,\text{eV} \leq F_{1s} \leq 688{,}5\,\text{eV}$ und $287\,\text{eV} \leq C_{1s} \leq 290\,\text{eV}$.

15. Elektrochemischer Stromerzeuger nach Anspruch 14, dadurch gekennzeichnet, dass die positive Elektrode aus einem Verbundmaterial besteht, das neben dem Fluorkohlenstoff eine Verbindung, die Elektronenleitung gewährleistet, und gegebenenfalls ein Bindemittel enthält.

16. Elektrochemischer Stromerzeuger nach Anspruch 15, dadurch gekennzeichnet, dass das Material, das die Elektronenleitung gewährleistet, aus Ruß, Acetylenruß, Graphitpulver, Koks und Kohlefasern ausgewählt ist.

17. Elektrochemischer Stromerzeuger nach Anspruch 15, dadurch gekennzeichnet, dass das Bindemittel aus einem Poly(ethylenoxid), einem PVDF (Polyvinylidenfluorid), einem EPDM (Ethylen-Propylen-Dien-Monomer), einem Poly(acrylnitril) oder einem Styrol-Butadien-Kautschuk (SBR) ausgewählt ist.

18. Elektrochemischer Stromerzeuger nach Anspruch 14, dadurch gekennzeichnet, dass die negative Elektrode aus einer/einem Lithiumfolie oder -film oder aus einer metallischen Lithiumlegierung oder aus Kohlenstoff-Lithium ausgewählt ist.

19. Elektrochemischer Stromerzeuger nach Anspruch 14, dadurch gekennzeichnet, dass der Elektrolyt ein flüssiger Elektrolyt ist, der aus einem in einem polaren Lösungsmittel gelöstem Salz besteht.

20. Elektrochemischer Stromerzeuger nach Anspruch 19, dadurch gekennzeichnet, dass das Salz aus den Verbindungen $LiAsF_6$, $LiBF_4$, $LiCF_3SO_3$, $LiClO_4$, $LiN(CF_3SO_2)_2$ und $LiPF_6$ ausgewählt ist.

21. Elektrochemischer Stromerzeuger nach Anspruch 19, dadurch gekennzeichnet, dass das Lösungsmittel aus Diethylcarbonat, Diethoxyethan, Dimethoxymethan, Dimethylcarbonat, Propylencarbonat, Ethylencarbonat oder $\gamma$-Butyrolacton ausgewählt ist.

22. Elektrochemischer Stromerzeuger nach Anspruch 14, dadurch gekennzeichnet, dass die Scheidewand auf einem Polyethylen- und/oder Polypropylen-Faservlies basiert.

## Claims

1. Fluorinated carbon, characterised in that :

   - it corresponds to the formula $CF_xM_y$ in which x > 0.6, y < 0.018, and M represents an element chosen from I, C1, Br, Re, W, Mo, Nb, Ta, B, Ti, P, As, Sb, S, Se, Te, Pt, Ir and Os ;
   - its crystallographic parameter a, corresponding to the line (100) of the lattice, is such that $2.46\,\text{Å} \leq a \leq 2.49\,\text{Å}$ ;
   - the C-F bond energy is characterised by the strongest lines $F_{1s}$ and $C_{1s}$ at positions such that $687.5\,\text{eV} \leq F_{1s} \leq 688.5\,\text{eV}$ and $287\,\text{eV} \leq C_{1s} \leq 290\,\text{eV}$, in the ESCA spectra.

2. Method of preparing a fluorinated carbon, characterised in that :

   - during a first step, a carbon compound chosen from natural or synthetic graphites and carbons which are graphitizable by a thermal treatment, having a mosaic texture, are reacted with a gaseous mixture ($HF + F_2$), in the presence of a fluoride $MF_n$ at a temperature between 15°C and 80°C, where M represents an element chosen from I, C1, Br, Re, W, Mo, Nb, Ta, B, Ti, P, As, Sb, S, Se, Te, Pt, Ir and Os, and n represents the valence of the element M, with $n \leq 7$ ;
   - during a second step, the compound obtained at the end of the first step is reacted with fluorine for 1-20 hours at a temperature between 20°C and 400°C.

3. Method according to claim 2, characterised in that the starting product for the first step is a natural graphite or a graphitizable carbon with a mosaic texture having a particle size of less than 100 µm.

**EP 0 910 547 B1**

4. Method according to claim 3, characterised in that the graphitizable carbon is a coal tar coke or a petroleum coke.

5. Method according to claim 2, characterised in that the fluoride MF is chosen from $IF_7$, $IF_5$, $BrF_5$, $ClF_3$, $ReF_6$, $WF_6$, $MoF_6$, $TiF_4$, $NbF_5$, $T_2F_5$, $PF_5$, $AsF_5$, $SbF_5$, $BF_3$, $SF_6$, $SeF_6$, $IrF_6$, $OsF_6$, $TeF_6$, and $PtF_6$.

6. Method according to claim 2, characterised in that the gaseous mixture used during the first step is constituted by 0.8 to 1.2 moles of $MF_n$, 2 to 6 moles of HF, and 6 to 8 moles of $F_2$ for the treatment of 8 to 14 moles of C.

7. Method according to claim 2, characterised in that, in the course of the second step of the method, the partial pressure of $F_2$ is comprised between $5 \times 10^4$ Pa an $10^5$ Pa.

8. Method according to claim 2, characterised in that the initial carbonaceous compound is a graphitizable coke and the temperature during the second step is comprised between 20°C and 100°C.

9. Method according to claim 2, characterised in that the initial carbonaceous compound is a graphite and the temperature during the second step is comprised between 80°C and 400°C.

10. Method according to claim 2, characterised in that the fluoride $MF_n$ is introduced into the reaction medium.

11. Method according to claim 2, characterised in that the fluoride $MF_n$ is formed in situ by direct action of fluorine on the element M or on one of its oxides $MO_q$ for which $2q < n \leq 7$, or one of its lower fluorides $MF_p$ for which $p < n \leq 7$.

12. Method according to claim 2, characterised in that the product obtained at the end of the first step is washed before being subjected to the action of fluorine during the second step.

13. Positive electrode for a lithium electrochemical generator, characterised in that it contains as active material a fluorinated carbon according to claim 1.

14. Electrochemical generator comprising a lithium negative electrode and a positive electrode, between which a separator is placed, and an electrolyte, characterised in that the positive electrode contains, as active material, a fluorinated carbon :

   - which corresponds to the formula $CF_xM_y$ in which $x > 0.6$, $y < 0.018$, and M represents an element chosen from I, C1, Br, Re, W, Mo, Nb, Ta, B, Ti, P, As, Sb, S, Se, Te, Pt, Ir and Os ;
   - which has a crystallographic parameter a, corresponding to the line (100) of the lattice, such that $2.46 \text{ Å} \leq a \leq 2.49 \text{ Å}$ ;
   - the C-F bond energy of which is characterised by the strongest lines $F_{1s}$ and $C_{1s}$ at positions such that $687.5 \text{ eV} \leq F_{1S} < 688.5 \text{ eV}$ and $287 \text{ eV} \leq C_{1S} \leq 290 \text{ eV}$, in the ESCA spectra.

15. Electrochemical generator according to claim 14, characterised in that the positive electrode is constituted by a composite material comprising, besides the fluorinated carbon, a compound which provides electronic conduction, and possibly a binder.

16. Electrochemical generator according to claim 15, characterised in that the material providing electronic conduction is chosen from carbon blacks, acetylene black, powdered graphite, cokes, and carbon fibres.

17. Electrochemical generator according to claim 15, characterised in that the binder is chosen from a poly(ethylene oxide), a PVDF (polyvinylidene fluoride), a EDPM (ethylene-propylene-diene monomer), a poly(acrylonitrile), or a styrene-butadiene rubber (SBR).

18. Electrochemical generator according to claim 14, characterised in that the negative electrode is constituted by a foil or a film of lithium or of a metallic alloy of lithium, or of carbon-lithium.

19. Electrochemical generator according to claim 14, characterised in that the electrolyte is a liquid electrolyte constituted by a salt in solution in a polar solvent.

20. Electrochemical generator according to claim 19, characterised in that the salt is chosen from the compounds $LiAsF_6$, $LiBF_4$, $LiCF_3SO_3$, $LiClO_4$, $LiN(CF_3SO_2)_2$, $LiPF_6$.

21. Electrochemical generator according to claim 19, characterised in that the solvent is chosen from diethyl carbonate, diethoxyethane, dimethoxymethane, dimethyl carbonate, propylene carbonate, ethylene carbonate, or butyrolactone.

22. Electrochemical generator according to claim 14, characterised in that the separator is based on a non-woven polyethylene and/or polypropylene.